# EUROPEAN PATENT APPLICATION

(11) **EP 4 831 778 A1**
(43) Date of publication of application: **28.10.2026**
(21) Application number: 26173025.3
(22) Date of filing: 17.04.2026
(51) Int. Cl.: G06F 3/041

(54) **PRESSING POSITION DETECTION APPARATUS AND PRESSING POSITION DETECTION METHOD**

(30) Priority: 24.04.2025 CN 202510525290
(71) Applicant: Alps Alpine Co., Ltd., Ota-ku, Tokyo 145-8501 (JP)
(72) Inventor: Jiang, Bo, Tokyo (JP)
(74) Representative: Schmitt-Nilson Schraud Waibel Wohlfrom Patentanwälte Partnerschaft mbB

(57) **Abstract**

A pressing position detection apparatus and a pressing position detection method are provided. The apparatus includes an information storage unit configured to store coordinate data of one or more pressing positions disposed on a panel; a relative position measuring unit configured to measure relative position data of the panel relative to a reference surface when the pressing position on the panel is pressed; a posture change calculating unit configured to calculate, based on the relative position data measured by the relative position measuring unit, a posture change of the panel relative to the reference surface; and a pressing position detecting unit configured to detect, based on the posture change calculated by the posture change calculating unit and the coordinate data stored in the information storage unit, the pressing position.

## Description

The present disclosure claims priority under 35 U.S.C. §119 to Chinese Application No. 202510525290.X filed on April 24, 2025.

The present disclosure relates to a pressing position detection apparatus and a pressing position detection method.

With the trend of vehicle intelligence, so-called smart surfaces are now being used in vehicles to replace traditional interior trim. Smart surfaces add electronic display and electronic control functions to the material surface, and activate these functions through human-computer interaction such as touch and voice control, thereby achieving a surface structure that integrates decoration and functionality. Smart surfaces may be implemented, for example, by providing light-emitting diode elements and touch panels in surface materials such as textiles, leather, wood, metal, and composite fibers.

In conventional technologies, a touch panel of a smart surface generally has an electrode layer. When a user touches the touch panel with a finger, the electrostatic capacitance at a touch position changes, thereby implementing a corresponding function and operation at the coordinates of the touch position.

Furthermore, in smart surfaces of conventional technologies, in order to prevent accidental operation, a pressure sensor may be attached to capacitive a panel. When the panel is touched, the touch action is valid only if there is a change in capacitance and the pressure sensor detects a certain pressure or higher.

However, in such smart surfaces, in order to achieve accurate operation, it is necessary to simultaneously install a touch sensor for detecting changes in electrostatic capacitance and a pressure sensor for detecting the pressure applied during pressing. Thus, there are technical challenges that are structurally complex and costly.

In view of the problem of conventional technologies, an object of the embodiments of the present disclosure is to provide an apparatus and a method for detecting a pressure position, which can achieve high-precision detection with simple structure and low cost.

The present disclosure relates to a pressing position detection apparatus and method according to the appended claims. Embodiments are disclosed in the dependent claims.

According to an aspect of the present disclosure, a pressing position detection apparatus is provided. The pressing position detection apparatus includes an information storage unit configured to store coordinate data of one or more pressing positions disposed on a panel; a relative position measuring unit configured to measure relative position data of the panel relative to a reference surface when the pressing position on the panel is pressed; a posture change calculating unit configured to calculate, based on the relative position data measured by the relative position measuring unit, a posture change of the panel relative to the reference surface; and a pressing position detecting unit configured to detect, based on the posture change calculated by the posture change calculating unit and the coordinate data stored in the information storage unit, the pressing position.

According to another aspect of the present disclosure, a pressing position detection method is provided. The pressing position detection method includes measuring relative position data of a panel relative to a reference surface when a pressing position among one or more pressing positions on the panel is pressed; calculating, based on the measured relative position data, a posture change of the panel relative to the reference surface; and detecting, based on the posture change and stored coordinate data of the one or more pressing positions disposed on the panel, the pressing position.

### BRIEF DESCRIPTION OF THE DRAWINGS

FIG. 1 is a schematic cross-sectional view of a smart surface 1000 with a pressing position detection apparatus 100 according to an embodiment.
FIG. 2 is a schematic top view of the smart surface 1000 with the pressing position detection apparatus 100 according to an embodiment.
FIG. 3 is a block diagram showing a functional configuration of the pressing position detection apparatus 100 according to an embodiment.
FIG. 4 is a schematic diagram showing detection of relative position data before and after pressing by a plurality of distance measurement sensors 121 on a reference surface.
FIG. 5 is a schematic diagram showing calculation of a posture change based on the relative position data.
FIG. 6 is a flowchart showing a pressing position detection method executed by the pressing position detection apparatus 100.
FIG. 7 is a flowchart showing a first detection method performed by a pressing position detecting unit 140.
FIG. 8 is a schematic diagram showing a change in force balance of a panel 200 before and after pressing.
FIG. 9 is a schematic diagram showing calculation of an actual compression amount based on the posture change before and after pressing.
FIGs. 10A and 10B are schematic diagrams showing calculation of actual pressing coordinates based on the change in force balance before and after pressing.
FIG. 11 is a flowchart illustrating a second detection method performed by the pressing position detecting unit 140.

### DESCRIPTION OF THE PREFERRED EMBODIMENTS

In the following, embodiments of the present disclosure will be described with reference to the accompanying drawings. However, various aspects technically preferred for carrying out the present disclosure are added to the embodiments described below. Therefore, the scope of the technology of the present disclosure is not limited to the following embodiments and the illustrated examples. Furthermore, the sizes, shapes, and proportions in the illustrated examples are merely schematic and do not represent specific sizes, shapes, and proportions. Additionally, in the drawings, common components in the embodiments are labeled with the same symbols, and repeated descriptions are omitted.

### (Smart Surface 1000)

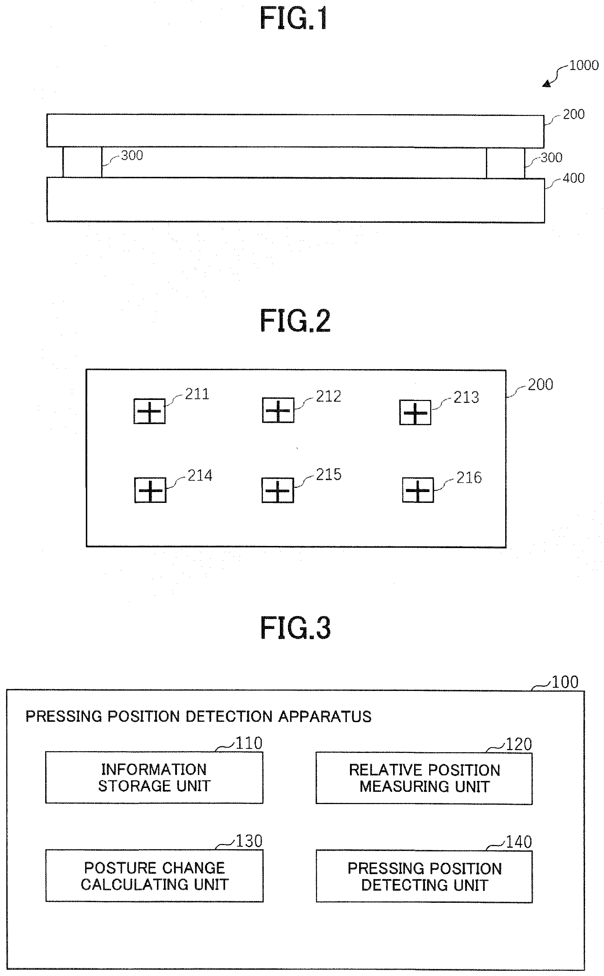

First, a smart surface 1000 using a pressing position detection apparatus 100 of an embodiment will be described. FIG. 1 is the schematic cross-sectional view of a smart surface 1000 with a pressing position detection apparatus 100. FIG. 2 is the schematic top view of a smart surface 1000 with a pressing position detection apparatus 100. The smart surface 1000 includes a panel 200, one or more elastic pads 300, and a support 400. The smart surface 1000 is, for example, an interior surface in a vehicle, such as a part of a center console or a door control console. However, the smart surface 1000 may also be a touch surface of a device other than the vehicle, such as a touch surface of a home appliance.

As shown in FIG. 1, the smart surface 1000 employs a suspension structure in which the panel 200 is supported by the elastic pads 300 located on an upper surface of the support 400. The elastic pads 300 are, for example, four elastic pads 300 at the four corners supporting the panel 200. The support 400, as a structure providing physical support to the panel 200, is made, for example, of composite fiber or reinforced plastic materials. The support 400 is fixed to a vehicle, a home appliance, or the like. Hereinafter, the upper surface of the support 400 will be referred to as the reference surface. The elastic pads 300 are, for example, elastic structures such as rubber pads or spring pads, capable of deformation under force. The four elastic pads 300 have the same standard length when not under force, and produce the same elastic deformation after being subjected to a contact force from the panel 200. In other words, the four elastic pads 300 are elastic elements with strain proportional to stress and the same elastic coefficient k. Furthermore, due to limitations such as the size and weight of the panel 200, the number and positions of the elastic pads 300 are not limited to the example shown in the figure.

The panel 200, as a touch surface of the smart surface 1000, has a smooth surface when viewed from above. The panel 200 may be composed of a multi-layer structure, for example, having a decorative layer, a light source layer, and a functional circuit layer sequentially from a top surface of the panel 200. The decorative layer, as a surface of the panel 200, is made of wood, metal, fabric, resin, leather, artificial leather, polymer, carbon fiber, or a composite material of various materials, and for example, has a certain degree of light transmittance. The light source layer includes light-emitting elements, for example, an LED panel or an OLED panel. The functional circuit layer, for example, is connected to the light source layer, so that the light source layer illuminates the light-emitting elements towards the decorative layer according to control commands, thereby displaying a corresponding pattern on the panel 200. Furthermore, the functional circuit layer may also include sensor elements such as signal sensors and proximity sensors. Alternatively, the panel 200 may also be a single-layer structure, for example, consisting only of the decorative layer.

As shown in FIG. 2, an upper surface of the panel 200 includes a plurality of preset pressing positions 211 to 216. The pressing positions 211 to 216 serve as input keys to which different functions implemented by the smart surface 1000 correspond. In other words, the panel 200 functions as an input panel of the smart surface 1000. The preset pressing positions 211 to 216 may display respective icons on the upper surface of the panel 200 by illuminating the light-emitting element from the light source layer of the panel 200 towards the decorative layer, or may display respective icons by printing or engraving patterns on the upper surface of the panel 200. FIG. 2 shows an example of six preset pressing positions 211 to 216 arranged in two rows and three columns, but the number and arrangement of the pressing positions are not limited. For example, a single row of preset pressing positions arranged in one dimension may be used as needed.

### (Pressing Position Detection Apparatus 100)

In the following, a pressing position detection apparatus 100 for detecting a specific pressing position when the panel 200 of the smart surface 1000 is pressed will be described in detail. FIG. 3 is a block diagram showing a functional configuration of a pressing position detection apparatus 100 according to an embodiment. As shown in FIG. 3, the pressing position detection apparatus 100 includes an information storage unit 110, a relative position measuring unit 120, a posture change calculating unit 130, and the pressing position detecting unit 140. The pressing position detection apparatus 100 may be implemented as software installed in a device with a processor and a memory, such as a computer, or may be a dedicated integrated circuit capable of implementing the function of the pressing position detection apparatus 100.

The information storage unit 110 stores at least coordinate data of the pressing positions 211 to 216 disposed on the panel 200 in advance. For example, the coordinate data of the pressing position may be distances from the respective pressing positions 211 to 216 to each edge of the panel 200.

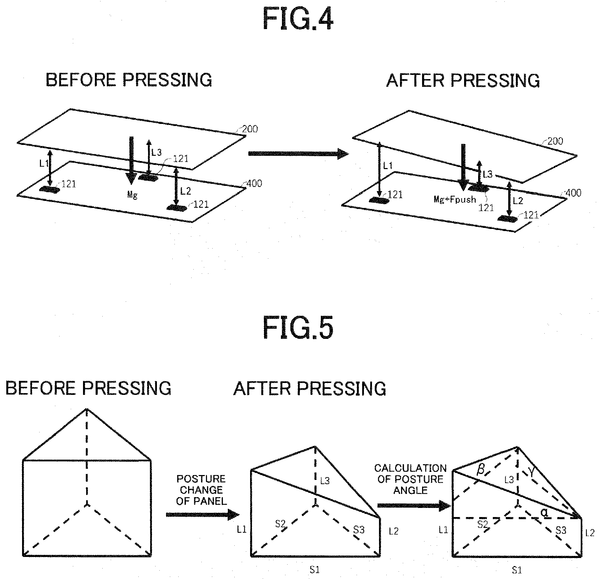

The relative position measuring unit 120 measures relative position data of the panel 200 relative to the reference surface of the support 400 when a point on the panel 200 is pressed. The relative position measuring unit 120 may receive data from external distance measurement sensors, or may include one or more distance measurement sensors as a part of itself. Referring to FIG4, an example where a plurality of distance measurement sensors are provided on the upper surface of the support 400, i.e., the reference surface, and the relative position measuring unit 120 receives data from these sensors to measure the relative position data of the panel 200 relative to the reference surface of the support 400 will be described.

FIG. 4 is the schematic diagram showing the detection of the relative position data before and after pressing by the plurality of distance measurement sensors 121 on the reference surface. As shown in FIG. 4, three distance measurement sensors 121 are disposed on the upper surface of the support 400, i.e., the reference surface. The distance measurement sensors 121 are, for example, at least one of laser distance measurement sensors, ultrasonic distance measurement sensors, infrared distance measurement sensors, and electromagnetic wave distance measurement sensors. The distance measurement sensors preferably have a detection accuracy of 0.01 mm, and may also be distance measurement sensors with micrometer-level accuracy.

Each of the distance measurement sensors 121 disposed on the reference surface measures a vertical distance from a position of the distance measurement sensor 121 on the reference surface to the panel 200. The combination of the vertical distances measured by the plurality of distance measurement sensors 121 serves as the relative position data of the panel 200 relative to the reference surface. The distance measurement sensor 121 may perform the distance measurement at predetermined time intervals, and for example, the distance measurement sensor 121 may be a fixed-frequency IR (infrared) sensor.

For example, as shown in FIG. 4, before the panel 200 is pressed, the panel 200 is parallel to the reference surface. Therefore, the relative position data L1, L2 and L3 measured by the three distance measurement sensors 121 located on the reference surface are equal. After the panel 200 is pressed, the compression amount of the plurality of elastic pads 300 varies depending on the pressing position. Thus, the panel 200 tilts relative to the reference surface, resulting in a change in posture. Consequently, the relative position data L1, L2 and L3 measured by the three distance measurement sensors 121 are different. The relative position data L1, L2 and L3 measured by the three distance measurement sensors 121 are transmitted to the relative position measuring unit 120 of the pressing position detection apparatus 100 via wired or wireless communication.

Furthermore, although FIG. 4 illustrates an example of three distance measurement sensors 121 disposed on the reference surface, a number of the distance measurement sensors may be determined, for example, based on the size of the panel 200. Moreover, the number of the distance measurement sensors and the positions of the distance measurement sensors on the reference surface may also be determined based on a number of the preset pressing positions on the panel 200 and the positional relationship (arrangement) of the pressing positions.

For example, for the plurality of pressing positions 211 to 216 two-dimensionally arranged as shown in FIG. 2, three or more distance measurement sensors are provided. The three or more distance measurement sensors are not collinear with each other. For example, for a row of pressing positions arranged in one dimension, two distance measurement sensors may be provided, and a direction of a line connecting the two distance measurement sensors is preferably parallel to the arrangement direction of the row of pressing positions.

Furthermore, it is preferable to position the plurality of distance measurement sensors on the reference surface so that each pressing position among the plurality of pressing positions 211 to 216 on the panel 200 exists within an area formed by projection points of the plurality of distance measurement sensors on the panel 200. By setting the positions of the plurality of distance measurement sensors on the reference surface in this way, influence of small deformation of the panel 200 when the panel 200 is pressed on the measurement accuracy when detecting the pressing position based on the relative position data from the distance measurement sensors, as described later, can be suppressed.

In addition, the distance measurement sensors may also be embedded in the elastic pads 300. For example, a pressure sensor may be attached in at least a portion of the plurality of elastic pads 300, and the pressure sensor functions as a distance measurement sensor through a stress-strain relationship. Alternatively, the distance measurement sensor may also be placed at a position other than the reference surface, as long as the distance from the panel to the reference surface can be measured by the distance measurement sensor.

The posture change calculating unit 130 calculates a posture change of the panel 200 relative to the reference surface based on the relative position data measured by the relative position measuring unit 120. For example, the posture change calculating unit 130 calculates the posture change of the panel 200 relative to the reference surface based on the relative position data using a trigonometric analytical function. Hereinafter, a case of calculating the posture change based on the relative position data measured by three distance measurement sensors disposed on the reference surface and not collinear with each other will be described as an example. FIG. 5 is the schematic diagram showing the calculation of the posture change based on the relative position data. In FIG. 5, three vertices of a lower surface of a triangular prism correspond to the positions of the three distance measurement sensors on the reference surface, respectively, and three vertices of an upper surface of the triangular prism correspond to intersection points of the panel 200 and lines extending along a vertical direction from the positions of the three distance measurement sensors, respectively. Therefore, L1, L2 and L3 correspond to the relative position data of the pressed panel 200 measured by the three distance measurement sensors, respectively, and S1, S2 and S3 correspond to the distances between each pair of the three distance measurement sensors, respectively. Thus, by substituting the relative position data L1, L2 and L3 measured by the relative position measuring unit 120 into a cosine theorem equation, actual posture angles α, β and γ in a connection direction of the distance measurement sensors can be obtained.
Posture angle α: $cos α = \left(S{1}^{2}+S{1}^{2}+{\left(L1-L2\right)}^{2}-{\left(L1-L2\right)}^{2}\right) / \left(2*S1*\sqrt{S {1}^{2} + {\left(L1-L2\right)}^{2}}\right)$ (Equation 1)
Posture angle β: $cos β = \left({S 2}^{2}+{S 2}^{2}+{\left(L1-L3\right)}^{2}-{\left(L1-L3\right)}^{2}\right) / \left(2*S2*\sqrt{{S 2}^{2} + {\left(L1-L3\right)}^{2}}\right)$ (Equation 2)
Posture angle γ: $cos γ = \left({S 3}^{2}+{S 3}^{2}+{\left(L3-L2\right)}^{2}-{\left(L3-L2\right)}^{2}\right) / \left(2*S3*\sqrt{{S 3}^{2} + {\left(L3-L2\right)}^{2}}\right)$ (Equation 3)

Furthermore, in the above description, the posture angles α, β and γ in the connection direction between each pair of distance measurement sensors serve as an example of the posture change. However, the posture change may also be other geometric features, such as a plane equation of the panel 200.

Furthermore, the example of three non-collinear distance measurement sensors arranged on the reference surface is described above. However, the number of the three non-collinear distance measurement sensors is merely a minimum value of the distance measurement sensors for detecting the plurality of pressing positions 211 to 216 arranged two-dimensionally on the panel 200, and there may also be more than three distance measurement sensors. By increasing the number and distribution density of the distance measurement sensors, the pressing positions can be detected with high accuracy.

The pressing position detecting unit 140 detects the pressing position based on the posture change calculated by the posture change calculating unit 130 and the coordinate data stored in the information storage unit 110. The pressing position detecting unit 140, for example, according to the principle of force balance, determines whether the actual pressing coordinates corresponding to the posture change calculated by the posture change calculating unit 130 match the coordinate data of a certain pressing position among the plurality of preset pressing positions 211 to 216. If the actual pressing coordinates match a certain pressing position, the pressing position is output. The specific detection method will be described later. Alternatively, the pressing position detecting unit 140 may also determine whether the posture change calculated by the posture change calculating unit 130 matches the posture change corresponding to a certain pressing position among the plurality of preset pressing positions 211 to 216. If the posture change matches a certain pressing position, the pressing position is output. The specific detection method will be described later.

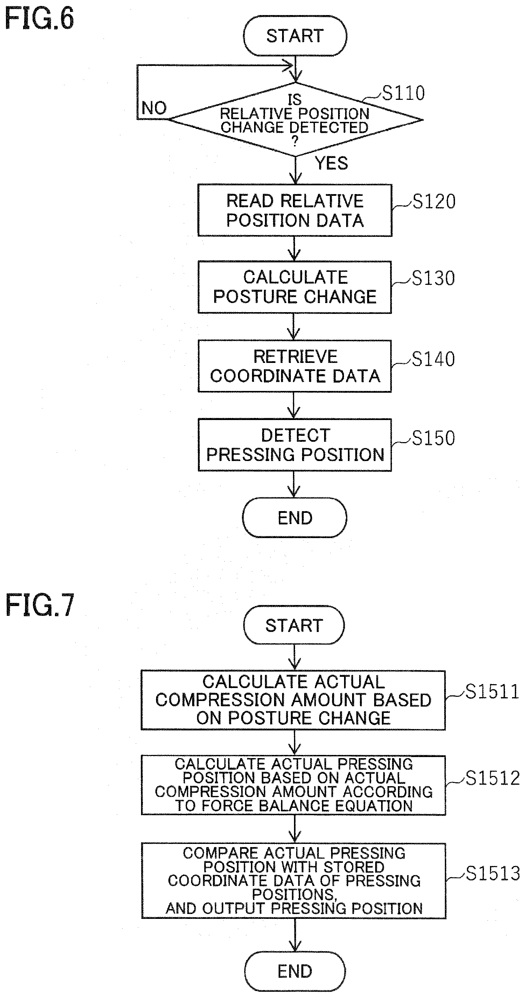

Hereinafter, a pressing position detection method performed by a pressing position detection apparatus 100 will be specifically described with reference to FIG. 6.

FIG. 6 is a flowchart showing a pressing position detection method executed by a pressing position detection apparatus 100. As shown in FIG. 6, first, the relative position measuring unit 120 monitors distance measurement data received from the plurality of distance measurement sensors, and detects whether a relative position change has occurred (S110). For example, if a change amount in the distance measurement data received from the one or more distance measurement sensors exceeds a predetermined threshold, a relative position change of the panel 200 relative to the reference surface is detected (S110: Yes), and it is determined that pressing from a user has occurred. For example, if the change amount in the distance measurement data received from all of the distance measurement sensors does not exceed the threshold, no relative position change of the panel 200 relative to the reference surface is detected (S110: No), it is determined that no pressing has occurred or it is determined that the pressing force does not exceed the pressure that should exist for an intentional pressing, and the above monitoring is repeated. Furthermore, before a relative position change occurs (i.e., before pressing), the relative position measuring unit 120 may also read the distance measurement data measured by the plurality of distance measurement sensors in an initial state as initial relative position data.

If the relative position change of the panel 200 relative to the reference surface occurs (S110: Yes), the relative position measuring unit 120 reads the measured distance measurement data and sends the data to the posture change calculating unit 130 (S120). For example, the relative position measuring unit 120 sends the relative position data in real time after detecting the relative position change.

Subsequently, after the posture change calculating unit 130 receives the relative position data, the posture change calculating unit 130 calculates the posture change of the panel 200 relative to the reference surface based on the relative position data measured by the relative position measuring unit 120, and sends the posture change to the pressing position detecting unit 140 (S130).

The pressing position detecting unit 140 retrieves the coordinate data of the preset pressing positions 211 to 216 stored in the information storage unit 110 (S140), and detects the pressing position based on the posture change received from the posture change calculating unit 130 and the coordinate data stored in the information storage unit 110 (S150).

In this way, by performing a pressing position detection method by the pressing position detection apparatus 100, there is no need to provide a touch sensor for detecting electrostatic capacitance changes, the pressing position can be detected simply by detecting the relative position data, thereby reducing costs and simplifying the assembly of the smart surface 1000.

In the following, two specific detection methods used by the pressing position detecting unit 140 to detect the pressing position based on the posture changes and the coordinate data in step S150 of FIG. 6 will be described in detail.

### (First Detection Method of Pressing position Detecting Unit 140)

In the following, a first detection method by which the pressing position detecting unit 140 detects the pressing position based on the principle of force balance will be described. FIG. 7 is a flowchart showing the first detection method performed by the pressing position detecting unit 140.

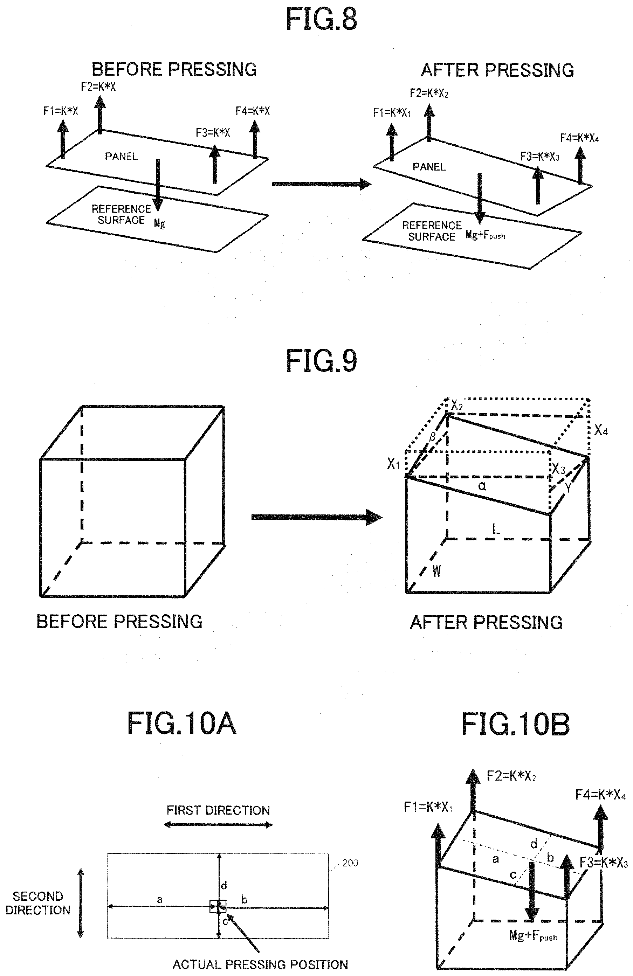

As shown in FIG. 7, first, the pressing position detecting unit 140 calculates the actual compression amount based on the posture change (S1511). The meaning of the actual compression amount determined by the force balance change will be explained below with reference to FIGs. 8 and 9. FIG. 8 is the schematic diagram showing the change in force balance of the panel 200 before and after pressing. As shown in FIG. 8, before the panel 200 is pressed, the forces F1, F2, F3 and F4 on the plurality of elastic pads 300 are balanced, satisfying F1=K*X, F2=K*X, F3=K*X, and F4=K*X, where K is elastic coefficients of the elastic pads 300, and X is the compression amount of the panel 200 before pressing. If the weight of the panel 200 is Mg, Mg = F1 + F2 + F3 + F4.

As shown in FIG. 8, after the panel 200 is pressed, the plurality of elastic pads 300 are compressed respectively. According to the positions of the actual pressing coordinates, the actual compression amount of the elastic pads 300 are different, which are set as X1, X2, X3 and X4, respectively. Then, after the panel 200 is pressed, the forces F1, F2, F3 and F4 on the respective elastic pads 300 satisfy F1=K*X1, F2=K*X2, F3=K*X3 and F4=K*X4, and satisfy Mg + Fpush = F1 + F2 + F3 + F4, where Fpush is the pressing force.

FIG. 9 is a schematic diagram showing a calculation of the actual compression amount based on the posture change before and after pressing. As shown in FIG. 9, if the distance between the four elastic pads 300 in a first direction (e.g., a longitudinal direction) is L, and the distance in a second direction (e.g., a lateral direction) orthogonal to the first direction is W, by substituting the posture angles α, β and γ calculated in the posture change calculating unit 130 into the cosine theorem equation as shown in equations 4 to 6, a proportional relationship among the actual compression amounts X1, X2, X3 and X4 can be derived.
Posture angle α: $cos α = \left({L}^{2}+{L}^{2}+{\left(X3-X1\right)}^{2}-{\left(X3-X1\right)}^{2}\right) / \left(2*L*\sqrt{{L}^{2} + {\left(X3-X1\right)}^{2}}\right)$ (Equation 4)
Posture angle β: $cos β = \left({W}^{2}+{W}^{2}+{\left(X2-X1\right)}^{2}-{\left(X2-X1\right)}^{2}\right) / \left(2*W*\sqrt{{W}^{2} + {\left(X2-X1\right)}^{2}}\right)$ (Equation 5)
Posture angle γ: $cos γ = \left({W}^{2}+{W}^{2}+{\left(X3-X4\right)}^{2}-{\left(X3-X4\right)}^{2}\right) / \left(2*W*\sqrt{{W}^{2} + {\left(X3-X4\right)}^{2}}\right)$ (Equation 6)

Returning to FIG. 7, after calculating the actual compression amount, the pressing position detecting unit 140 calculates the actual pressing coordinates based on the force balance principle and the proportional relationship among the actual compression amounts X1, X2, X3 and X4 derived from above equations 4 to 6 (S1512).

Specifically, a calculation of the actual pressing coordinates based on the change in force balance before and after pressing will be described with reference to FIGs. 10A and 10B. FIG. 10A is a schematic top view showing the actual pressing coordinates. FIG. 10B is a schematic diagram showing the relationship between the actual compression amount and the actual pressing coordinates after pressing. When a certain position on the panel 200 is pressed, the distances from the actual pressing coordinates to the four sides of the panel 200 are set as a, b, c and d, respectively, as the actual pressing coordinates.

First, according to the principle of force balance, since torques in the first direction are balanced, F1/F3 = b/a and F2/F4 = b/a are satisfied. Furthermore, since torques in the second direction are balanced, F1/F2 = d/c and F3/F4 = d/c are satisfied. Moreover, according to Hooke's Law, values of F1, F2, F3 and F4 after pressing are proportional to compression amounts X1, X2, X3 and X4 of the elastic pads 300 after pressing, respectively. Additionally, the length a+b and the width c+d of the panel 200 are known data.

Therefore, the actual pressing coordinates a and b in the first direction can be obtained using only at least one of the ratios of the compression amounts X1/X3 and X2/X4 calculated in S1511. Similarly, the actual pressing coordinates c and d in the second direction can be obtained using only at least one of the ratios of the compression amounts X1/X2 and X3/X4 calculated in S1511.

Returning to FIG. 7, after calculating the actual pressing coordinates, the pressing position detecting unit 140 compares the actual pressing position with the coordinate data of the pressing positions 211 to 216 retrieved in step S140 of FIG. 6, and outputs the corresponding pressing position (S1513). For example, if the actual pressing coordinates correspond to the coordinate data of a certain pressing position among the pressing positions 211 to 216, the pressing position detecting unit 140 outputs an instruction corresponding to the pressing position to an external device, control system, etc., so that the function of the input key of the smart surface 1000 corresponding to the pressing position is executed by a corresponding actuator.

In this way, the actual pressing coordinates can be calculated based on the principle of force balance only by detecting relative position data using the relative position measuring unit 120, without providing a touch sensor for detecting changes in electrostatic capacitance in the pressing position detection apparatus 100, thereby reducing production costs and enabling high-precision detection of the pressing position.

Furthermore, in step S1513 of FIG. 7, the pressing position detecting unit 140 outputs the pressing position corresponding to the actual pressing position. However, the pressing position detecting unit 140 may also compare a similarity between the coordinate data of the preset pressing positions 211 to 216 and the calculated actual pressing coordinates, and output the pressing position only if the similarity is greater than a threshold.

Specifically, for example, the pressing position detecting unit 140 calculates distances between the actual pressing coordinates and the coordinate data of the preset pressing positions 211 to 216 according to a distance formula between two points in a two-dimensional plane, and determines the similarity in a manner that the smaller the distance, the greater the similarity.

The pressing position detecting unit 140 determines whether there is a pressing position among the plurality of preset pressing positions 211 to 216 whose similarity with the actual pressing coordinates is greater than the threshold. For example, the threshold of the similarity is defined by the coordinate distance mentioned above. The pressing position detecting unit 140 considers a case where the coordinate distance between the actual pressing coordinate and a certain pressing position among the preset pressing positions 211 to 216 is less than a predetermined distance, as a case where the similarity is greater than the threshold. For example, the pressing position detecting unit 140 determines a pressing position whose similarity with the actual pressing coordinate is significantly higher than that of other pressing positions among the preset pressing positions 211 to 216, as the pressing position whose similarity is greater than the threshold.

If the pressing position detecting unit 140 determines that a pressing position with a similarity greater than the threshold, the pressing position detecting unit 140 outputs the pressing position. Then, the pressing position detecting unit 140 outputs an instruction corresponding to the pressing position so that the function of the input key on the smart surface 1000 corresponding to the pressing position is executed by the corresponding actuator.

Furthermore, if the pressing position detecting unit 140 determines that no pressing position with a similarity greater than the threshold exists, the pressing position detecting unit 140 does not output any pressing position and ends the process. That is, in this case, the pressing position detecting unit 140 determines that the detected pressing is a mis-touch or a pressing operation without any intention to press the button.

### (Second Detection Method of Pressing Position Detecting Unit 140)

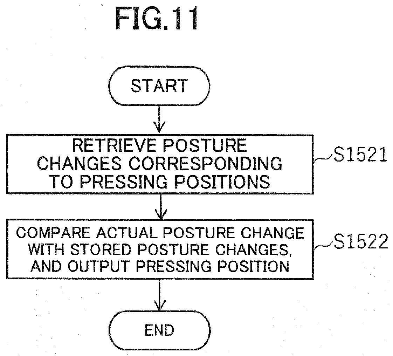

Hereinafter, a second detection method by which the pressing position detecting unit 140 detects the pressing positions based on a preset database will be described. FIG. 11 is a flowchart illustrating the second detection method performed by the pressing position detecting unit 140.

First, in the second detection method, the information storage unit 110 may further store predetermined posture changes of the panel 200 relative to the reference surface when the respective pressing positions 211 to 216 are pressed. That is, the information storage unit 110 presets a database representing a relationship between the pressing positions 211 to 216 and the predetermined posture changes. The database may also represent the predetermined posture changes when the respective pressing positions 211 to 216 are pressed. For example, since the posture change of the panel 200 varies to a certain extent depending on the pressing force when a certain pressing position among the plurality of pressing positions 211 to 216 is pressed, a median value of the posture change of a certain pressing position is taken as the predetermined posture change of the pressing position. Specifically, a median value of the predetermined posture angle when a certain pressing position is pressed is taken as the predetermined posture angle of the pressing position. Therefore, as shown in Table 1 below, the information storage unit 110 stores the predetermined posture angles of the panel 200 relative to the reference surface when the respective pressing positions 211 to 216 are pressed.

**[Table 1]**

| Pressing Position | Predetermined Posture Angle |
|---|---|
| 211 | α1, β1, γ1 |
| 212 | α2, β2, γ2 |
| 213 | α3, β3, γ3 |
| 214 | α4, β4, γ4 |
| 215 | α5, β5, γ5 |
| 216 | α6, β6, γ6 |

Furthermore, in the second detection method, in step S140 of FIG. 6, the pressing position detecting unit 140 further retrieves the posture changes corresponding to the preset pressing positions 211 to 216 stored in the information storage unit 110 (S1521). Specifically, the pressing position detecting unit 140 retrieves, for example, the above Table 1 stored in the information storage unit 110.

Furthermore, the pressing position detecting unit 140 receives the posture change calculated by the posture change calculating unit 130, compares the calculated posture change with the predetermined posture changes corresponding to the preset pressing positions 211 to 216, and outputs the corresponding pressing position (S1522). For example, if the posture change calculated by the posture change calculating unit 130 corresponds to the predetermined posture change of a certain pressing position among the pressing positions 211 to 216, the pressing position detecting unit 140 outputs an instruction corresponding to the pressing position to an external device, a control system, etc., so that the function of the input key of the smart surface 1000 corresponding to the pressing position is executed by the corresponding actuator.

In this way, there is no need to provide a touch sensor for detecting changes in electrostatic capacitance in the pressing position detection apparatus 100. The pressing position can be detected based on the predetermined posture changes of the respective pressing positions 211 to 216 simply by detecting the relative position data through the relative position measuring unit 120, thereby reducing costs and simplifying device assembly.

Furthermore, by setting the predetermined posture changes of the respective pressing positions 211 to 216, and outputting the instruction corresponding to the pressing position only when the calculated posture change corresponds to the predetermined posture change of a specific pressing position, it is possible to recognize posture changes corresponding to forces within a predetermined range, thereby recognizing intentional pressing by the user and avoiding false detections.

In addition, in step S1522 of FIG. 11, the pressing position detecting unit 140 outputs the pressing position corresponding to the posture change calculated by the posture change calculating unit 130. However, the pressing position detecting unit 140 may also compare similarities between the predetermined posture changes of the respective pressing positions 211 to 216 with the posture change calculated by the posture change calculating unit 130, and output the pressing position only if the similarity is greater than a threshold.

Specifically, the pressing position detecting unit 140, for example, calculates differences between the actual posture angle and the predetermined posture angles corresponding to the preset pressing positions 211 to 216, and determines the similarity in a manner that the smaller the difference, the greater the similarity.

If the pressing position detecting unit 140 determines that a posture change with a similarity greater than a threshold exists, the pressing position detecting unit 140 outputs the pressure position corresponding to the posture change.

Furthermore, if it is determined that no pressure position with a similarity greater than the threshold exists, any of the pressure positions 211 to 216 is not output and the process is terminated. That is, in this case, the pressing position detecting unit 140 determines that the detected pressure is a mis-touch or a pressing operation without any intention to press a functional button.

Furthermore, in the above description, the application of the pressing position detection apparatus 100 to the smart surface 1000 was described as an example, but the pressing position detection apparatus 100 and the pressure position detection method executed by the pressing position detection apparatus 100 may also be applied to touch panels, handwriting panels, and the like.

According to an aspect of the present disclosure, a pressing position detection apparatus, is provided. The pressing position detection apparatus includes an information storage unit configured to store coordinate data of one or more pressing positions disposed on a panel; a relative position measuring unit configured to measure relative position data of the panel relative to a reference surface when the pressing position on the panel is pressed; a posture change calculating unit configured to calculate, based on the relative position data measured by the relative position measuring unit, a posture change of the panel relative to the reference surface; and a pressing position detecting unit configured to detect, based on the posture change calculated by the posture change calculating unit and the coordinate data stored in the information storage unit, the pressing position.

Therefore, there is no need to provide a touch sensor for detecting changes in electrostatic capacitance, and the pressing position can be detected simply by detecting relative position data, thereby reducing costs and simplifying device assembly.

Preferably, in the pressing position detection apparatus of the aspect of the present disclosure, the information storage unit may further store one or more predetermined posture changes of the panel relative to the reference surface when the respective pressing positions are pressed. The pressing position detecting unit may detect, based on the posture change calculated by the posture change calculating unit and the one or more predetermined posture changes stored in the information storage unit, the pressing position.

Therefore, by pre-setting a database including the predetermined posture changes corresponding to the respective pressing positions, the pressing position can be detected with high precision.

Preferably, in the pressing position detection apparatus of the aspect of the present disclosure, the pressing position detecting unit may calculate, based on the posture change calculated by the posture change calculating unit, actual pressing coordinates, and may detect, based on the actual pressing coordinates and the coordinate data stored in the information storage unit, the pressing position.

Therefore, the actual pressing coordinates can be calculated based on the principle of force balance, by detecting relative position data, thereby enabling high-precision detection of the pressing position.

Preferably, in the pressing position detection apparatus of the aspect of the present disclosure, the relative position measuring unit may measure, using one or more distance measurement sensors, the relative position data.

Therefore, there is no need to provide a touch sensor for detecting changes in electrostatic capacitance, and the pressing position can be detected simply by the distance measurement sensors.

Preferably, in the pressing position detection apparatus of the aspect of the present disclosure, the one or more distance measurement sensors may include at least one of laser distance measurement sensors, ultrasonic distance measurement sensors, infrared distance measurement sensors, and electromagnetic wave distance measurement sensors.

Therefore, the pressing position can be accurately detected using at least one of the distance measurement sensors.

Preferably, in the pressing position detection apparatus of the aspect of the present disclosure, the one or more distance measurement sensors may be disposed on the reference surface.

Therefore, the distance measurement sensor can be easily installed and the pressing position can be detected with high precision.

Preferably, in the pressing position detection apparatus of the aspect of the present disclosure, a number of the one or more distance measurement sensors and positions of the one or more distance measurement sensors on the reference surface may be determined based on a number of the one or more pressing positions and the positional relationship of the one or more pressing positions.

Therefore, by setting the number and distribution of the distance measurement sensors according to the preset number and distribution of the pressing positions, the pressing position can be detected with high precision in a case where the pressing positions are preset in one-dimensional or two-dimensional distribution.

Preferably, in the pressing position detection apparatus of the aspect of the present disclosure, the panel may be an input panel having input keys corresponding to the one or more pressing positions. The pressing position detecting unit may output the detected pressing position so that a function of each input key corresponding to the pressing position is executed.

Therefore, the function of the corresponding input key can be executed by implementing the detection on the pressing position.

Preferably, in the pressing position detection apparatus of the aspect of the present disclosure, the pressing position detecting unit may output the pressing position corresponding to a predetermined posture change so that the function of each input key corresponding to the pressing position is executed, only in a case where the posture change calculated by the posture change calculating unit is the predetermined posture change.

Therefore, by executing the function of the corresponding input key only in the case of a predetermined posture change, the posture change corresponding to, for example, a predetermined force can be recognized, thereby recognizing intentional pressing by the user and avoiding false detections.

According to another aspect of the present disclosure, a pressing position detection method is provided. The pressing position detection method includes measuring relative position data of a panel relative to a reference surface when a pressing position among one or more pressing positions on the panel is pressed; calculating, based on the measured relative position data, a posture change of the panel relative to the reference surface; and detecting, based on the posture change and stored coordinate data of the one or more pressing positions disposed on the panel, the pressing position.

Therefore, there is no need to provide a touch sensor for detecting changes in electrostatic capacitance, and the pressing position can be detected simply by detecting relative position data, thereby reducing costs and simplifying device assembly.

Embodiments and modifications of the present disclosure have been described above, but these embodiments are only provided as examples and are not intended to limit the scope of the present disclosure. These embodiments and various modifications are included within the scope of the claims.

## Claims

1. A pressing position detection apparatus, comprising:
an information storage unit configured to store coordinate data of one or more pressing positions disposed on a panel;
a relative position measuring unit configured to measure relative position data of the panel relative to a reference surface when the pressing position on the panel is pressed;
a posture change calculating unit configured to calculate, based on the relative position data measured by the relative position measuring unit, a posture change of the panel relative to the reference surface; and
a pressing position detecting unit configured to detect, based on the posture change calculated by the posture change calculating unit and the coordinate data stored in the information storage unit, the pressing position.

2. The pressing position detection apparatus as claimed in claim 1,
wherein the information storage unit is configured to further store one or more predetermined posture changes of the panel relative to the reference surface when the respective pressing positions are pressed, and
the pressing position detecting unit is configured to detect, based on the posture change calculated by the posture change calculating unit and the one or more predetermined posture changes stored in the information storage unit, the pressing position.

3. The pressing position detection apparatus as claimed in claim 1 or 2,
wherein the pressing position detecting unit is configured to
calculate, based on the posture change calculated by the posture change calculating unit, actual pressing coordinates, and
detect, based on the actual pressing coordinates and the coordinate data stored in the information storage unit, the pressing position.

4. The pressing position detection apparatus as claimed in one of claims 1 to 3,
wherein the relative position measuring unit is configured to measure, using one or more distance measurement sensors, the relative position data.

5. The pressing position detection apparatus as claimed in claim 4,
wherein the one or more distance measurement sensors include at least one of a laser distance measurement sensor, ultrasonic distance measurement sensor, infrared distance measurement sensor, and electromagnetic wave distance measurement sensor.

6. The pressing position detection apparatus as claimed in claim 4 or 5,
wherein the one or more distance measurement sensors are disposed on the reference surface.

7. The pressing position detection apparatus as claimed in claim 6,
wherein a number of the one or more distance measurement sensors and positions of the one or more distance measurement sensors on the reference surface are determined based on a number of the one or more pressing positions and the positional relationship of the one or more pressing positions.

8. The pressing position detection apparatus as claimed in one of claims 1 to 7,
wherein the panel is an input panel having input keys corresponding to the one or more pressing positions, and
the pressing position detecting unit is configured to output the detected pressing position so that a function of each input key corresponding to the pressing position is executed.

9. The pressing position detection apparatus as claimed in claim 8,
wherein the pressing position detecting unit is configured to output the pressing position corresponding to a predetermined posture change so that the function of each input key corresponding to the pressing position is executed, only in a case where the posture change calculated by the posture change calculating unit is the predetermined posture change.

10. A pressing position detection method, comprising:
measuring relative position data of a panel relative to a reference surface when a pressing position among one or more pressing positions on the panel is pressed;
calculating, based on the measured relative position data, a posture change of the panel relative to the reference surface; and
detecting, based on the posture change and stored coordinate data of the one or more pressing positions disposed on the panel, the pressing position.
